# EUROPEAN PATENT APPLICATION

(11) **EP 3 101 708 A1**
(43) Date of publication of application: **07.12.2016**
(21) Application number: 16169081.3
(22) Date of filing: 11.05.2016
(51) Int. Cl.: H01M 2/02, B32B 15/04, B32B 27/00, H01M 10/0525

(54) **LITHIUM ION SECONDARY BATTERY**

(30) Priority: 01.06.2015 JP 2015111692
(71) Applicant: Automotive Energy Supply Corporation, Zama-shi, Kanagawa 252-0012 (JP)
(72) Inventor: Taguchi, Hiromoto, Kanagawa, 252-0012 (JP); Kimura, Aika, Kanagawa, 252-0012 (JP); Mizuta, Masatomo, Kanagawa, 252-0012 (JP); Tanjo, Yuji, Kanagawa, 252-0012 (JP)
(74) Representative: Herzog, Fiesser & Partner Patentanwälte PartG mbB

(57) **Abstract**

Provided is a lithium ion secondary battery that includes a package housing a positive electrode, a negative electrode, a separator, and an electrolyte solution. In the lithium ion secondary battery: the package including a stack including a metal base material, an acid modified polypropylene layer, and a polypropylene layer stacked sequentially; the polypropylene layer forms an inner surface of the package; the package includes a heat-sealed portion and a non-sealed portion; and the thickness of one acid modified polypropylene layer included in the heat-sealed portion is smaller than a half of the thickness of the polypropylene layer included in the heat-sealed portion.

## Description

### CROSS-REFERENCE TO RELATED APPLICATION

This application claims priority from Japanese Patent Application No. 2015-111692 filed with the Japan Patent Office on June 1, 2015, the entire content of which is hereby incorporated by reference.

### BACKGROUND

### 1. Technical Field

The present disclosure relates to a lithium ion secondary battery.

### 2. Related Art

Nonaqueous electrolyte batteries have been put into practical use as batteries for vehicles including hybrid vehicles and electric vehicles. Lithium ion secondary batteries have been used as such on-vehicle batteries. The on-vehicle batteries have been required to be reduced in thickness and weight, and to satisfy such requirements, a sheet-shaped lithium ion secondary battery has been provided. This type of lithium ion secondary battery includes a package formed of a laminate film including a metal base material. The package houses a power generation element and an electrolyte solution. The power generation element includes a positive electrode, a negative electrode, and a separator.

As the laminate film of the package of the battery, a stack including a biaxially stretchable nylon film layer, a metal foil layer, an adhesive reinforcement layer, and a thermally adhesive resin layer, which are stacked in order from the outside to the inside of the package, has been suggested (JP-A-2011-142092). Here, the adhesive reinforcement layer is formed of, for example, an acid modified propylene copolymer. The thermally adhesive resin layer is formed of, for example, propylene-ethylene copolymer, propylene-ethylene-α-olefin copolymer, or propylene ethylene butene terpolymer.

### SUMMARY

A lithium ion secondary battery according to an embodiment of the present disclosure includes a package housing a positive electrode, a negative electrode, a separator, and an electrolyte solution. In the lithium ion secondary battery: the package including a stack including a metal base material, an acid modified polypropylene layer, and a polypropylene layer stacked sequentially; the polypropylene layer forms an inner surface of the package; the package includes a heat-sealed portion and a non-sealed portion; and the thickness of one acid modified polypropylene layer included in the heat-sealed portion is smaller than a half of the thickness of the polypropylene layer included in the heat-sealed portion.

### BRIEF DESCRIPTION OF THE DRAWINGS

Fig. 1 is a schematic sectional view illustrating a lithium ion secondary battery according to one embodiment of the present disclosure; and
Figs. 2A and 2B are magnified views illustrating a heat-sealed portion and a non-sealed portion of a package.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The laminate film is used for the package of the battery in a manner that, for example, two laminate films are disposed to have the battery components (such as the positive electrode, the negative electrode, and the separator) interposed therebetween and then the outer peripheries of the laminate films are heat-sealed. Inside this package, a nonaqueous electrolyte solution is housed and then the package is sealed. After the sealing, the thermally adhesive resin layer inside the package is in contact with the nonaqueous electrolyte solution. The thermally adhesive resin layer formed of an organic polymer is gradually impregnated with the nonaqueous electrolyte solution, which is an organic substance. This nonaqueous electrolyte solution goes through the thermally adhesive resin layer to reach the adhesive reinforcement layer and the metal foil layer. On this occasion, the nonaqueous electrolyte solution goes through the adhesive reinforcement layer formed of the polymer with a polar group more easily than through the thermally adhesive resin layer formed of the non-polar polymer. This may cause the nonaqueous electrolyte solution to flow along the adhesive reinforcement layer and leak out of the package.

An objective of the present disclosure is to provide a lithium ion secondary battery, in which the liquid shortage of the battery is avoided by preventing the leakage of the nonaqueous electrolyte solution out of the battery and of which battery life is extended by such prevention.

A lithium ion secondary battery according to an embodiment of the present disclosure includes a package, which includes a power generation element including a positive electrode, a negative electrode, and a separator, and an electrolyte solution. The package includes a stack including a metal base material, an acid modified polypropylene layer, and a polypropylene layer stacked in this order. Here, in this lithium ion secondary battery, the thickness of one acid modified polypropylene layer in the heat-sealed portion of the package is smaller than a half of the thickness of the polypropylene layer.

According to the lithium ion secondary battery of the present disclosure, the leakage of the electrolyte solution is suppressed, thereby preventing the shortage of the electrolyte solution. This enables to extend the battery life.

An embodiment of the present disclosure will be described below. A positive electrode in this embodiment is a battery member with a shape like a thin plate or a sheet. This member includes a positive electrode active material layer formed by applying or rolling a mixture, which includes a positive electrode active material, binder, and if necessary a conductive agent, on a positive electrode current collector such as a metal foil and then drying the mixture. A negative electrode in this embodiment is a battery member with a shape like a thin plate or a sheet. This member includes a negative electrode active material layer formed by applying a mixture, which includes a negative electrode active material, binder, and if necessary a conductive agent, on a negative electrode current collector. The separator is a film-shaped battery member. This member separates between the positive electrode and the negative electrode to secure the conduction of lithium ions between the positive electrode and the negative electrode. The electrolyte solution is an electrically conductive solution obtained by dissolving an ionic substance in a solvent. In this embodiment, particularly a nonaqueous electrolyte solution can be used. The power generation element including the positive electrode, the negative electrode, and the separator constitutes one unit of the battery main components. In general, this power generation element is a stack having the positive electrode and the negative electrode overlapped (stacked) on each other with the separator interposed therebetween. In the lithium ion secondary battery according to the embodiment of the present disclosure, this stack is immersed in the electrolyte solution.

The lithium ion secondary battery according to the embodiment includes the package and the power generation element housed inside the package. Preferably, the power generation element is housed inside the sealed package. Here, "sealed" refers to the state that the power generation element is covered with the package material to be described below so that the power generation element is not exposed to the external air. That is to say, the package has a sealable bag-like shape that can house the power generation element inside.

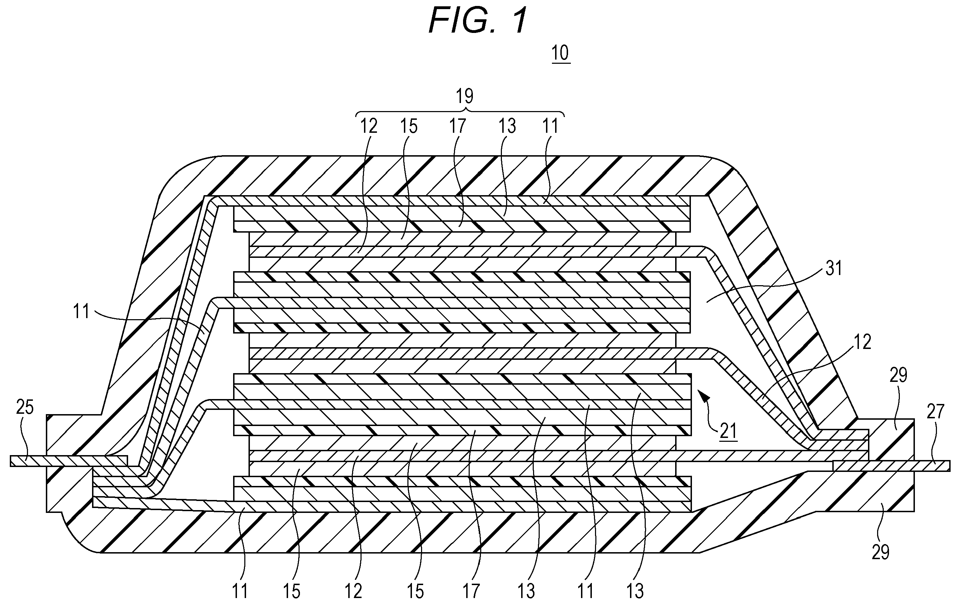

Description will be hereinafter made of a structure example of the lithium ion secondary battery according to the embodiment with reference to the drawings. Fig. 1 illustrates an example of a cross section of the lithium ion secondary battery. A lithium ion secondary battery 10 includes, as main components, a negative electrode current collector 11, a negative electrode active material layer 13, a separator 17, a positive electrode current collector 12, and a positive electrode active material layer 15. In Fig. 1, the negative electrode active material layer 13 is provided on each surface of the negative electrode current collector 11 and the positive electrode active material layer 15 is provided on each surface of the positive electrode current collector 12. Alternatively, the active material layer may be formed on only one surface of each current collector. The negative electrode current collector 11, the positive electrode current collector 12, the negative electrode active material layer 13, the positive electrode active material layer 15, and the separator 17 constitute a battery unit, i.e., the power generation element (unit cell 19 in the drawing). A plurality of such unit cells 19 is stacked with the separator 17 interposed therebetween. Extension portions extending from the negative electrode current collector 11 are collected and bonded onto a negative electrode lead 25. Extension portions extending from the positive electrode current collector 12 are collected and bonded onto a positive electrode lead 27. The positive electrode lead is preferably an aluminum plate and the negative electrode lead is preferably a copper plate. In some cases, the aluminum plate and the copper plate may be partly coated with another metal (such as nickel, tin, or solder) or a polymer material. The positive electrode lead and the negative electrode lead are welded to the positive electrode and the negative electrode, respectively. The battery including the stacked unit cells is covered with a package 29 with the welded negative electrode lead 25 and positive electrode lead 27 led out of the battery. An electrolyte solution 31 is poured into the package 29. The package 29 has a shape obtained by heat-sealing the periphery of the two stacks.

The package includes a stack including a metal base material, an acid modified polypropylene layer and a polypropylene layer that are sequentially stacked. On a surface of the metal base material in the stack, a polymer coating layer such as a nylon layer or a polyethylene terephthalate layer may be additionally formed. The package is formed so that the polypropylene layer of the stack constitutes an inner surface of the package.

The metal base material included in the stack is a base material suitably used for an exterior film of the battery, and is preferably a metal foil. Examples of the metal base material to be used here include foils of aluminum, nickel, iron, copper, stainless steel, and tin. The metal base material has a function of sealing the package housing the nonaqueous electrolyte solution.

"Acid modified polypropylene" in the acid modified polypropylene layer refers to polypropylene including acid introduced by grafting reaction. In this embodiment, however, the term "acid modified polypropylene" also includes the copolymer obtained by introducing acid to the copolymer with propylene introduced as the copolymer component, such as propylene-ethylene copolymer, propylene-ethylene-butene copolymer, or polypropylene-butene copolymer. Examples of the acid introduced by the grafting reaction include acrylic acid, methacrylic acid, maleic acid, maleic anhydride, itaconic acid, and itaconic anhydride. Maleic anhydride modified polypropylene, maleic anhydride modified propylene-ethylene copolymer, maleic anhydride modified propylene-ethylene-butene copolymer, and maleic anhydride modified polypropylene-butene copolymer, which are obtained by introducing maleic acid, are the typical "acid modified polypropylene". The acid modified polypropylene has a function of attaching the metal base material and the polypropylene layer to be described below.

In addition to the homopolymer of propylene, examples of the polypropylene included in the polypropylene layer in this embodiment include all the copolymers of propylene and other olefins, such as propylene-ethylene copolymer, propylene-ethylene-butene copolymer, polypropylene-butene copolymer, propylene-4-methylpentene-1 copolymer, and propylene-hexene copolymer. The aforementioned "polypropylene" may be a mixture including any of these. The polypropylene layer plays a role of making the stack have flexibility.

The thickness of each layer of the stack can vary depending on the size and the shape of the lithium ion secondary battery in which the stack serves as the package. For example, the thickness of the metal base material can be set in the range of 15 to 90 µm, preferably 25 to 60 µm. The thickness of the acid modified polypropylene layer can be set in the range of 10 to 60 µm, preferably 10 to 40 µm. The thickness of the polypropylene layer can be set in the range of 30 to 80 µm, preferably 40 to 70 µm. Specifically, the ratio between the thickness of the acid modified polypropylene layer and the thickness of the polypropylene layer may be adjusted. The ratio between the thickness of the acid modified polypropylene layer and the thickness of the polypropylene layer is preferably in the range of 1 : 7 to 1 : 2. Preferably, the thickness of the acid modified polypropylene layer is smaller than the thickness of the polypropylene layer.

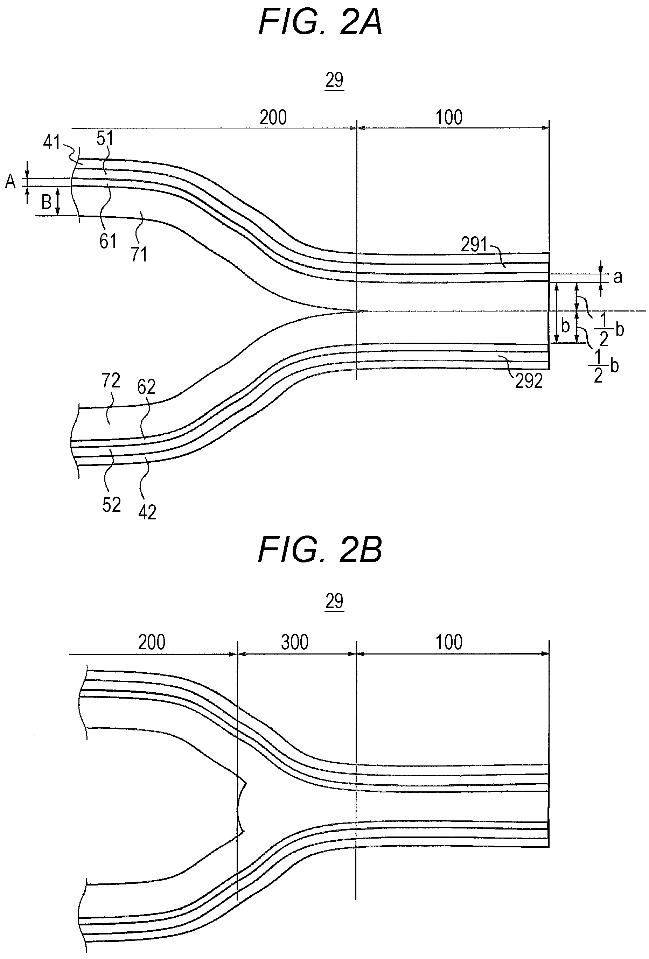

Description is made with reference to Figs. 2A and 2B. Fig. 2A is a magnified view of the heat-sealed portion and its periphery of the lithium ion secondary battery according to the embodiment. The package 29 used in this embodiment is formed by heat-sealing the periphery of overlapped stacks 291 and 292 with an appropriate overlapping size. The stack 291 includes a coating layer 41, a metal base material 51, an acid-modified polypropylene layer 61, and a polypropylene layer 71. Similarly, the stack 292 includes a coating layer 42, a metal base material 52, an acid-modified polypropylene layer 62, and a polypropylene layer 72. The package 29 is formed by heat-sealing the polypropylene layer 71 of the stack 291 and the polypropylene layer 72 of the stack 292. That is to say, the package 29 includes a heat-sealed portion 100 formed by heat-sealing the stacks and a non-sealed portion 200. The polypropylene layer 71 of one stack (291) and the polypropylene layer 72 of the other stack (292) included in the heat-sealed portion 100 are unified after being melted. The thickness of each of the acid modified polypropylene layers 61 and 62 included in the heat-sealed portion 100 may be smaller than a half of the thickness of the unified polypropylene layers included in the heat-sealed portion 100. The thickness of each layer refers to the average value of the thicknesses across the layer included in the heat-sealed portion 100. The heat-sealed portion 100 is formed at the periphery of the package 29 so as to surround the inside of the package 29. The width of the heat-sealed portion 100 is approximately 1.0 to 20.0 mm, preferably 2.0 to 10.0 mm, and more preferably 3.0 to 5.0 mm. "The thickness of the acid modified polypropylene layer included in the heat-sealed portion" refers to the average value of the thicknesses across the acid modified polypropylene layer included in the heat-sealed portion 100 with the aforementioned widths. That is to say, in Fig. 2, the thickness "a" of one acid modified polypropylene layer 61 and the thickness "b" of the unified polypropylene layers each represent the average value of the thicknesses across the layer included in the heat-sealed portion 100. Based on this, when the thickness of each of the acid modified polypropylene layers 61 and 62 included in the heat-sealed portion 100 is smaller than a half of the thickness of the unified polypropylene layers included in the heat-sealed portion 100, the relation of a < (1/2)b is satisfied.

Preferably, the ratio of a half of the thickness of the unified polypropylene layer to the thickness of one acid modified polypropylene layer is 2 or more. That is to say, in Fig. 2A, the ratio of (1/2)b to a is 2 or more. In other words, preferably, (1/2)b ≥ 2a is satisfied. If the thicknesses of the layers satisfy this relation, the acid modified polypropylene layer, which transmits the nonaqueous electrolyte solution more easily, is sufficiently thinner than the polypropylene layer. This can prevent the nonaqueous electrolyte solution from transmitting through the acid modified polypropylene layer to prevent the electrolyte solution from leaking out of the package.

In the heat-sealing of the package, the laminate films are pressed. The pressing may deform, for example, crush the thermally adhesive resin layer. In the occurrence of the deformation, the nonaqueous electrolyte solution reaches the adhesive reinforcement layer early. This causes the nonaqueous electrolyte solution leaks out of the package early. It is estimated that it takes at least ten years for the nonaqueous electrolyte solution to leak out of the package in accordance with the aforementioned mechanism. In consideration of the balance with the lifetime of the vehicle, however, using such a battery as the on-vehicle battery leaves a problem. In consideration of the lifetime of the vehicle, the lithium ion secondary battery according to the embodiment is particularly effective as the battery for the vehicle.

With reference to Fig. 2A, another embodiment of the lithium ion secondary battery according to the embodiment is described. The proportion of the sum of the thickness of one acid modified polypropylene layer and a half of the thickness of the unified polypropylene layer included in the heat-sealed portion of the package relative to the sum of the thickness of one acid modified polypropylene layer included in the non-sealed portion of the package and the thickness of one polypropylene layer included in the non-sealed portion is preferably in the range of 50 to 95%. That is to say, the proportion of the sum [a + (1/2)b] of [a] and [(1/2)b] illustrated in Fig. 2A relative to the sum [A + B] of the thickness [A] of the one acid modified polypropylene layer 61 (or 62) included in the non-sealed portion 200 and the thickness [B] of one polypropylene layer 71 (or 72) included in the non-sealed portion 200 is in the range of 50 to 95%.

The heat-sealed portion 100 is formed by having the overlapped stacks 291 and 292 pressed while heat is applied thereto (heat-sealing the stacks). The stacks in the heat-sealed portion are deformed and crushed a little as compared to the stacks in the non-sealed portion 200. The degree of the crush is preferably in the range of 50 to 95%. If this degree is less than 50%, the acid modified polypropylene layer and the polypropylene layer as the insulating material are thin in the heat-sealed portion. In this case, the distance for the electrolyte solution to reach the metal base material becomes short and the insulating property of the battery is decreased. If this degree is more than 95%, the acid modified polypropylene layer and the polypropylene layer are thick and the heat-sealing may be insufficient. If the degree of the crush of the polypropylene layers 71 and 72 included in the heat-sealed portion 100 is large, the polypropylene layer 71 of the stack 291 and the polypropylene layer 72 of the stack 292 are largely deformed as illustrated in Fig. 2B. As a result of the large deformation, a part of the unified polypropylene layer protrudes to the inside of the package 29 to form a boundary portion 300. If the boundary portion 300 is formed in this manner between the heat-sealed portion 100 and the non-sealed portion 200, the thickness of each layer included in the boundary portion 300 is not taken into consideration when the thicknesses of the layer are averaged.

Another embodiment of the lithium ion secondary battery according to the embodiment will be described (not shown). The proportion of the sum of the thickness of one acid modified polypropylene layer and the thickness of the unified polypropylene layer included in the heat-sealed portion of the package relative to the sum of the thickness of one acid modified polypropylene layer included in the non-sealed portion of the package and the thickness of one polypropylene layer included in the non-sealed portion is preferably in the range of 75 to 143%. That is to say, the proportion of the sum [a + b] of the thickness [a] of one acid modified polypropylene layer and the thickness [b] of the unified polypropylene layer included in the heat-sealed portion 100 relative to the sum [A + B] of the thickness [A] of one acid modified polypropylene layer included in the non-sealed portion 200 and the thickness [B] of one polypropylene layer included in the non-sealed portion 200 is in the range of 75 to 143%. If this degree is less than 75%, the acid modified polypropylene layer and the polypropylene layer as the insulating material are thin in the heat-sealed portion. As a result, the distance for the electrolyte solution to reach the metal base material becomes shorter and the insulating property of the battery is decreased. If this degree is more than 143%, the acid modified polypropylene layer and the polypropylene layer are thick and the heat-sealing may be insufficient.

Another embodiment of the lithium ion secondary battery according to the embodiment will be described (not shown). Preferably, the thickness of one acid modified polypropylene layer included in the heat-sealed portion of the package is smaller than the thickness of one acid modified polypropylene layer included in the non-sealed portion of the package. That is to say, the thickness [a] of one acid modified polypropylene layer included in the heat-sealed portion is smaller than the thickness [A] of one acid modified polypropylene layer included in the non-sealed portion (a < A). The thickness of the acid modified polypropylene layer which easily transmits the nonaqueous electrolyte solution is made sufficiently small relative to the thickness of the polypropylene layer only in the heat-sealed portion which is close to the end of the package and which can let the nonaqueous electrolyte solution go out. This enables to effectively prevent the leakage of the electrolyte solution out of the package without deteriorating the insulating property in the non-sealed portion.

The lithium ion secondary battery according to any of the above embodiments includes the positive electrode including the positive electrode active material layer including the positive electrode active material disposed on the positive electrode current collector. Preferably, the positive electrode includes the positive electrode active material layer formed by applying or rolling the mixture, which includes the positive electrode active material, binder, and if necessary the conductive agent, to the positive electrode current collector including a metal foil such as an aluminum foil and then drying the mixture. The positive electrode active material may be a lithium transition metal oxide. Preferred examples of the lithium transition metal oxide that can be employed include a lithium nickel oxide (such as LiNiO₂), a lithium cobalt oxide (such as LiCoO₂), a lithium manganese oxide (such as LiMn₂O₄), and a mixture including any of these. The positive electrode active material may be a lithium nickel manganese cobalt composite oxide represented by general formula LiₓNi_{y}Mn_{z}Co_{(1-y-z)}O₂, where x represents a positive numeral satisfying 1 ≤ x ≤ 1.2, y and z are positive numerals satisfying y + z < 1, and y is a numeral of 0.5 or less. Containing more manganese makes it difficult to form a composite oxide with a single phase. Thus, the relation of z ≤ 0.4 is desirably satisfied. Containing more cobalt increases the cost and decreases the battery capacity. Thus, the relations of 1 - y - z < y and 1 - y - z < z are desirably satisfied. In order to achieve the high-capacity battery, the relations of y > z and y > 1 - y - z are particularly preferably satisfied. The lithium nickel manganese cobalt composite oxide preferably has a layered crystal structure.

Examples of the conductive agent that can be employed as necessary in the positive electrode active material layer include carbon materials, for example, carbon fiber such as carbon nanofiber, carbon blacks such as acetylene black and Ketjen black, activated carbon, mesoporous carbon, fullerenes, and carbon nanotube. Additionally, the positive electrode active material layer may include additives that are usually used for forming the electrode, such as thickener, dispersant, and stabilizer.

The lithium ion secondary battery according to any of the above embodiments includes the negative electrode including the negative electrode active material layer including the negative electrode active material disposed on the negative electrode current collector. Preferably, the negative electrode includes the negative electrode active material layer formed by applying or rolling the mixture, which includes the negative electrode active material, binder, and if necessary the conductive agent, to the negative electrode current collector including a metal foil such as a copper foil and then drying the mixture. In this embodiment, the negative electrode active material preferably includes graphite particles and/or amorphous carbon particles. Using a mixed carbon material including both the graphite particles and the amorphous carbon particles improves the regeneration performance of the battery.

Graphite is a hexagonal crystal carbon material having the hexagonal-plate-like crystal structure. Graphite is also called black lead or the like. The preferred shape of the graphite is particle. Amorphous carbon may have a structure partly similar to graphite. Amorphous carbon refers to a carbon material that is amorphous as a whole, having a microcrystalline structure forming a network randomly. Examples of the amorphous carbon include carbon black, cokes, activated carbon, carbon fiber, hard carbon, soft carbon, and mesoporous carbon. The preferred shape of the amorphous carbon is particle.

Examples of the conductive agent used as necessary for the negative electrode active material layer include carbon fiber such as carbon nanofiber, carbon blacks such as acetylene black and Ketjen black, carbon materials such as activated carbon, mesoporous carbon, fullerenes, and carbon nanotube. Additionally, the negative electrode active material layer may contain additives usually used for forming the electrode, such as thickener, dispersant, and stabilizer.

Examples of the binder used for the positive electrode active material layer and the negative electrode active material layer include fluorine resin such as polyvinylidene fluoride (PVDF), polytetrafluoroethylene (hereinafter referred to as "PTFE"), and polyvinyl fluoride (hereinafter referred to as "PVF"), and conductive polymer such as polyanilines, polythiophenes, polyacetylenes, and polypyrroles.

Examples of the separator that separates between the negative electrode and the positive electrode to secure the conduction of lithium ions between the negative electrode and the positive electrode include a porous film and a microporous film of polyolefins such as polyethylene and polypropylene.

A preferred example of the electrolyte solution is a mixture including a linear carbonate and a cyclic carbonate. Examples of the linear carbonate include dimethyl carbonate (hereinafter referred to as "DMC"), diethyl carbonate (hereinafter referred to as "DEC"), di-n-propyl carbonate, di-i-propyl carbonate, di-n-butyl carbonate, di-isobutyl carbonate, and di-t-butyl carbonate. Examples of the cyclic carbonate include propylene carbonate (hereinafter referred to as "PC") and ethylene carbonate (hereinafter referred to as "EC"). The electrolyte solution is obtained by dissolving a lithium salt such as lithium hexafluorophosphate (LiPF₆), lithium tetrafluoroborate (LiBF₄), or lithium perchlorate (LiClO₄) in such a carbonate mixture.

A typical manufacturing method for a lithium ion secondary battery according to the embodiment is described.

### <Manufacture of positive electrode>

Nickel cobalt lithium manganate (for example, NCM433, nickel: cobalt: manganese = 4 : 3 : 3, lithium : nickel = 1 : 0.4) as the positive electrode active material, carbon black powder as the conductive agent, and PVDF as the binder resin were mixed in an appropriate solid content mass ratio. The resulting mixture was added to a solvent (such as N-methyl-2-pyrrolidone (hereinafter referred to as "NMP")). In addition, an organic moisture scavenger (for example, oxalic anhydride) was added to this mixture. The mixture was then subjected to the planetary dispersive mixing; thus, a slurry having these materials uniformly dispersed therein was prepared. The obtained slurry was applied onto an aluminum foil to serve as a positive electrode current collector. Next, the applied slurry was heated so that the NMP was vaporized. Thus, the positive electrode active material layer was formed. In addition, the obtained positive electrode active material layer was pressed, so that the positive electrode with the positive electrode active material layer applied on one surface of the positive electrode current collector was manufactured.

### <Manufacture of negative electrode>

A mixed material was formed as the negative electrode active material by mixing the graphite powder and the amorphous carbon powder (hard carbon) at an appropriate weight ratio. This mixed material, the carbon black powder as the conductive agent, and PVDF as the binder resin were mixed in an appropriate solid content mass ratio. The resulting mixture was added to NMP and this mixture was stirred. Thus, a slurry having these materials uniformly dispersed therein was prepared. The slurry was then applied onto a copper foil to serve as a negative electrode current collector. Next, the applied slurry was heated to vaporize NMP. Thus, the negative electrode active material layer was formed. In addition, the negative electrode active material layer was pressed, so that the negative electrode with the negative electrode active material layer applied on one surface of the negative electrode current collector was formed.

### <Manufacture of lithium ion secondary battery>

The negative electrode and the positive electrode manufactured as above were cut into rectangles with an appropriate size. In a portion thereof on which coating was not applied for connecting the terminal, a positive electrode lead terminal made of aluminum was welded with ultrasonic waves. Similarly, a negative electrode lead terminal made of nickel with the same size as the positive electrode lead terminal was welded with ultrasonic waves to a portion of a negative electrode plate on which coating was not applied. The negative electrode plate and a positive electrode plate were disposed on both surfaces of the separator including polypropylene with the active material layers stacked having the separator interposed therebetween; thus, the electrode plate stack was obtained. On the other hand, an aluminum laminate film was prepared as a stack. The aluminum laminate film includes a polyethylene terephthalate coating layer (12 µm thick), a nylon coating layer (15 µm thick), an aluminum foil (80 µm thick), an acid modified polypropylene layer (16 µm thick), and a polypropylene layer (64 µm thick). Out of the aluminum laminate film, a rectangle a little larger than the size of the positive electrode and the negative electrode was cut. Except one long side of the aluminum laminate film, the other three sides were attached through heat sealing. Thus, a bag-shaped package was manufactured. In the heat-sealing, an appropriate amount of pressure was applied so that the thickness of the layers in the heat-sealed portion remained in the preferable range. Into the bag-shaped package, the electrode stack was inserted. Next, a nonaqueous electrolyte solution was poured into the package. The nonaqueous electrolyte solution was obtained by dissolving a plurality of additives (methylene methane disulfonate (MMDS) and vinylene carbonate) at a concentration of 1 wt% each into a solution obtained by dissolving LiPF₆ as an electrolyte salt in a nonaqueous solvent including PC, EC, and DEC mixed with an appropriate ratio. After that, a vacuum impregnation step was performed and then the opening was heat-sealed under reduced pressure. Thus, a stacked lithium ion battery was obtained.

Examples of the present disclosure have been described so far but Examples merely represent some examples of the embodiment of the present disclosure. The description of Examples made above is not intended to limit the technical range of the lithium ion secondary battery according to the embodiment of the present disclosure to the particular embodiment or specific structure.

The lithium ion secondary battery according to the embodiment of the present disclosure may be any of the following first to fifth lithium ion secondary batteries.

The first lithium ion secondary battery is a lithium ion secondary battery having a power generation element housed inside a package, the power generation element including a positive electrode where a positive electrode active material layer is disposed on a positive electrode current collector, a negative electrode where a negative electrode active material layer is disposed on a negative electrode current collector, a separator, and an electrolyte solution, in which: the package is formed of a stack having a metal base material, an acid modified polypropylene layer and a polypropylene layer stacked in this order, the polypropylene layer forming an inner surface of the package; the package includes a heat-sealed portion and a non-sealed portion; and the thickness of one acid modified polypropylene layer is smaller than a half of the thickness of the polypropylene layer in the heat-sealed portion of the package.

The second lithium ion secondary battery is the first lithium ion secondary battery, in which the ratio of a half of the thickness of the polypropylene layer to the thickness of one acid modified polypropylene layer in the heat-sealed portion of the package is 2 or more.

The third lithium ion secondary battery is the first or second lithium ion secondary battery, in which the proportion of the sum of the thickness of one acid modified polypropylene layer and a half of the thickness of one polypropylene layer in the heat-sealed portion of the package relative to the sum of the thickness of one acid modified polypropylene layer and the thickness of the polypropylene layer in the non-sealed portion of the package is in the range of 50 to 95%.

The fourth lithium ion secondary battery is the first or second lithium ion secondary battery, in which the proportion of the sum of the thickness of one acid modified polypropylene layer and the thickness of one polypropylene layer in the heat-sealed portion of the package relative to the sum of the thickness of one acid modified polypropylene layer and the thickness of the polypropylene layer in the non-sealed portion of the package is in the range of 75 to 143%.

The fifth lithium ion secondary battery is any of the first to third lithium ion secondary batteries, in which the thickness of one acid modified polypropylene layer included in the heat-sealed portion of the package is smaller than the thickness of one acid modified polypropylene layer included in the non-sealed portion of the package.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A lithium ion secondary battery comprising
a package housing a positive electrode, a negative electrode, a separator, and an electrolyte solution, wherein
the package includes a stack including a metal base material, an acid modified polypropylene layer, and a polypropylene layer stacked sequentially,
the polypropylene layer forms an inner surface of the package,
the package includes a heat-sealed portion and a non-sealed portion, and
the thickness of one acid modified polypropylene layer included in the heat-sealed portion is smaller than a half of the thickness of the polypropylene layer included in the heat-sealed portion.

2. The lithium ion secondary battery according to claim 1, wherein a ratio of a half of the thickness of the polypropylene layer included in the heat-sealed portion relative to the thickness of the one acid modified polypropylene layer included in the heat-sealed portion is 2 or more.

3. The lithium ion secondary battery according to claim 1 or 2, wherein a proportion of a sum of the thickness of the one acid modified polypropylene layer included in the heat-sealed portion and a half of the thickness of the polypropylene layer included in the heat-sealed portion relative to a sum of the thickness of one acid modified polypropylene layer included in the non-sealed portion and the thickness of one polypropylene layer included in the non-sealed portion is in the range of 50 to 95%.

4. The lithium ion secondary battery according to claim 1 or 2, wherein a proportion of a sum of the thickness of the one acid modified polypropylene layer included in the heat-sealed portion and the thickness of the polypropylene layer included in the heat-sealed portion relative to a sum of the thickness of one acid modified polypropylene layer included in the non-sealed portion and the thickness of one polypropylene layer included in the non-sealed portion is in the range of 75 to 143%.

5. The lithium ion secondary battery according to any one of claims 1 to 3, wherein the thickness of the one acid modified polypropylene layer included in the heat-sealed portion is smaller than the thickness of one acid modified polypropylene layer included in the non-sealed portion.
